# EUROPEAN PATENT APPLICATION

(11) **EP 3 053 825 A1**
(43) Date of publication of application: **10.08.2016**
(21) Application number: 15202050.9
(22) Date of filing: 22.12.2015
(51) Int. Cl.: B64C 1/14, H05B 3/84

(54) **WINDSHIELD OF AIRCRAFT**

(30) Priority: 05.02.2015 JP 2015020991
(71) Applicant: Mitsubishi Aircraft Corporation, Nishikasugai-Gun Aichi 480-0287 (JP)
(72) Inventor: Yamaura, Taketoshi, Tokyo, 108-8215 (JP); Kitazume, Katsuya, Aichi, 480-0287 (JP); Hashimoto, Masaki, Aichi, 480-0287 (JP)
(74) Representative: Henkel, Breuer & Partner

(57) **Abstract**

A windshield (10) of an aircraft (1) of the present invention includes a conductive member (21, 22, 23, 26, 27, 28) that is configured to generate heat when a current is supplied. The conductive member (21, 22, 23, 26, 27, 28) is oriented in a lateral direction (DH) that is a horizontal direction included in an in-plane direction of the windshield (10).

## Description

### BACKGROUND OF THE INVENTION

### Field of the Invention

The present invention relates to a windshield of an aircraft, and more particularly, to a heater provided in the windshield.

### Description of the Related Art

A windshield of an aircraft includes a heater in order to prevent occurrence of fogging due to a temperature difference and adhesion of ice (Japanese Patent Laid-Open No. 2011-225076).

In Japanese Patent Laid-Open No. 2011-225076, a thin film of ITO (indium tin oxide), gold, silver, or the like is formed on a windshield panel as the heater. The fogging of the windshield and the adhesion of ice thereto are prevented by heat generated from the thin film to which a current is supplied.

The windshield of the aircraft, and the heater provided in the windshield need to have reliability against lightning.

Countermeasures against a direct strike of lightning are taken such that a high current of lightning striking a frame or the like of the windshield is spread to the airframe, which is a conductor. It is also necessary to take countermeasures against an induced current flowing through the heater of the windshield due to a strong magnetic field in association with the lightning current.

That is, it is necessary to avoid problems that a high induced current exceeding an allowable limit of a conductive film or an electrically-heated wire provided in the windshield as the heater flows through the conductive film or the electrically-heated wire, and a voltage of a controller connected to the heater is increased beyond a withstand voltage by an induced current flowing into the controller.

While an electromagnetic shield is typically used for avoiding generation of an induced current by an external magnetic field, it is difficult to ensure visibility required for the windshield while providing the windshield with shieldability high enough to block the strong magnetic field in association with the lightning current.

An object of the present invention is to provide effective countermeasures against an induced current that is induced in a heater of a windshield in a lightning strike.

### SUMMARY OF THE INVENTION

The present invention is a windshield of an aircraft, including a conductive member that is configured to generate heat when a current is supplied, wherein the conductive member is oriented in a lateral direction that is a horizontal direction included in an in-plane direction of the windshield.

The lateral direction in which the conductive member of the present invention is oriented is the horizontal direction. This is defied based on an attitude of the aircraft that is parked or cruising. The lateral direction in which the conductive member of the present invention is oriented corresponds to the horizontal direction of the parked or cruising aircraft.

The conductive member that functions as a heater of the windshield allows a current to flow in the direction in which the conductive member is oriented.

Therefore, when the conductive member is oriented in the horizontal lateral direction included in the in-plane direction of the windshield, a current flows through the conductive member along the lateral direction.

Also, when the conductive member is oriented in a longitudinal direction perpendicular to the lateral direction in the in-plane direction of the windshield, a current flows through the conductive member along the longitudinal direction. The longitudinal direction includes a component in a vertical direction.

A current of lightning striking the aircraft flows from an upper side to a lower side in the vertical direction in most cases.

Thus, when the component in the vertical direction is included in the direction in which the conductive member is oriented as in the above conductive member that is oriented in the longitudinal direction, an induced current flows through the conductive member in a direction in which a change in a magnetic flux of a magnetic field generated around the lightning current is hindered by electromagnetic induction from the magnetic field (Lenz's law).

On the other hand, when the conductive member is oriented in the horizontal lateral direction as in the present invention, almost no induced current can flow through the conductive member in the direction in which the change in the magnetic flux in association with the lightning current is hindered. Therefore, the induced current is suppressed.

The conductive member in the present invention can be configured as a belt-like member along the in-plane direction of the windshield, and a line-like member that is wired in the in-plane direction of the windshield.

As the conductive member in the present invention, three conductive members to which a three-phase alternating current is supplied can be prepared.

An aircraft of the present invention includes the above windshield.

In accordance with the present invention, even when the conductive member of the windshield is placed in the magnetic field in association with the lightning current, the induced current induced in the conductive member can be suppressed. Therefore, it is possible to ensure reliability by avoiding damage to the conductive member, and an electric wire and a controller etc. connected to the conductive member by the induced current.

Since the induced current can be coped with by setting the direction in which the conductive member is oriented to the lateral direction in the present invention, it is not necessary to cover the conductive member with an electromagnetic shield. Consequently, it is possible to ensure sufficient visibility required for the windshield.

### BRIEF DESCRIPTION OF THE DRAWINGS

FIG. 1 is a view illustrating an appearance of a windshield of an aircraft according to a first embodiment of the present invention;
FIG. 2 is a schematic view illustrating the windshield and an anti-icing/anti-fogging device shown in FIG. 1;
FIG. 3 is a schematic view illustrating a windshield and an anti-icing/anti-fogging device according to a comparative example;
FIGS. 4A and 4B are schematic views for explaining that an induced current flows through conductive layers oriented in a longitudinal direction of the comparative example shown in FIG. 3 in a lightning strike;
FIG. 5A is a schematic view for explaining that an increase in a magnetic flux is hindered, and FIG. 5B is a schematic view for explaining that a decrease in a magnetic flux is hindered;
FIGS. 6A and 6B are schematic views for explaining that an induced current hardly flows through conductive layers of the embodiment of the present invention in a lightning strike;
FIG. 7A is a schematic view for explaining that the conductive layers of the embodiment of the present invention hardly contributes to hindering a change in a magnetic flux, and FIG. 7B is a schematic view for explaining that the induced current hardly flows even when the aircraft is slightly inclined; and
FIG. 8 is a schematic view illustrating a windshield and an anti-icing/anti-fogging device of an aircraft according to a second embodiment of the present invention.

### DETAILED DESCRIPTION OF THE PREFERRED EMBODIMENTS

In the following, embodiments of the present invention will be described by reference to the accompanying drawings.

### [First Embodiment]

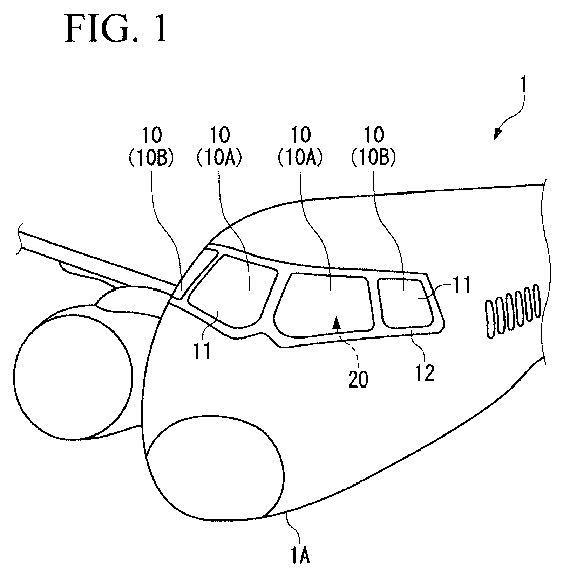

An aircraft 1 shown in FIG. 1 includes a windshield 10 and an anti-icing/anti-fogging device 20 that prevents fogging of the windshield 10 and adhesion of ice thereto at a front end of a nose 1A.

The windshield 10 includes main windshields 10A and 10A that ensure a front field of view from the inside of a cockpit, and side windshields 10B and 10B that ensure a side field of view from the inside of the cockpit. The windshields 10A, 10A, 10B, and 10B are symmetrically disposed.

In the following, the windshields 10A, 10A, 10B, and 10B are collectively referred to as the windshield 10.

The windshield 10 is a laminate including a plurality of transparent windshield panels 11 formed of glass, acrylic resin, or the like.

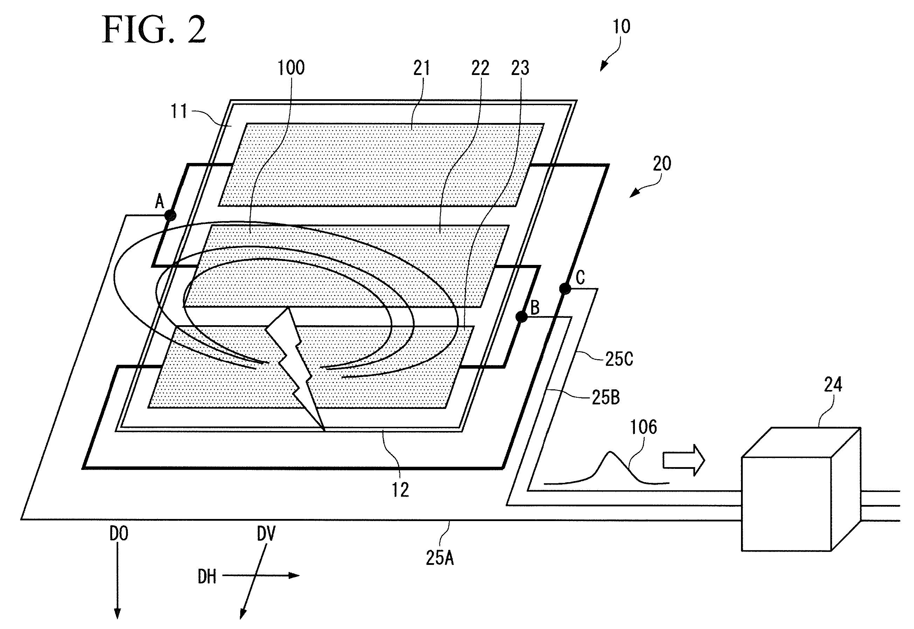

The laminate includes a layer that absorbs a shock, and a heater that constitutes the anti-icing/anti-fogging device 20 (conductive layers 21, 22, and 23 in FIG. 2).

The windshield 10 is curved along a shape of an airframe in which the windshield 10 is installed.

The windshield 10 is fixed to the airframe by a retainer 12 with a surface on an aircraft outer side directed obliquely upward.

The retainer 12 is disposed along an outer peripheral portion of the windshield panel 11 and an inner peripheral portion of an opening of the airframe.

The retainer 12 is formed of a metal material such as aluminum alloy, and is grounded to the airframe directly or via a fastener or the like.

The anti-icing/anti-fogging device 20 prevents or suppresses fogging of the windshield 10 due to a temperature difference between outside air and air within the cockpit, and adhesion of frost and ice to the outer surface of the windshield 10 in contact with outside air.

The anti-icing/anti-fogging device 20 includes the conductive layers 21, 22, and 23, and a controller 24 that applies a current to the conductive layers 21, 22, and 23 as shown in FIG. 2.

FIG. 2 shows the windshield 10 by simplifying its shape.

The three belt-like conductive layers 21, 22, and 23 are disposed along a curved in-plane direction of the windshield 10. The conductive layers 21, 22, and 23 are independent of each other.

The conductive layers 21, 22, and 23 correspond to a three-phase alternating current applied by the controller 24. The conductive layers 21, 22, and 23 function as the heater by generating heat when a current is supplied.

Although delta connection is employed for connection of the conductive layers 21, 22, and 23 in the present embodiment, star connection may be also employed.

The conductive layers 21, 22, and 23 are provided in each of the windshields 10A, 10A, 10B, and 10B.

The conductive layers 21, 22, and 23 are transparent or substantially transparent thin films of ITO (indium tin oxide), gold, silver, or the like. The conductive layers 21, 22, and 23 can be formed on the windshield panel 11 by vapor deposition or the like. Alternatively, a base film where the conductive layers 21, 22, and 23 are formed may be interposed between layers of the windshield 10.

The conductive layers 21, 22, and 23 can be provided at an appropriate position in a thickness direction of the windshield 10. For example, when the windshield 10 includes an outer panel disposed on the aircraft outer side and an inner panel disposed on an aircraft inner side as the windshield panels 11, the conductive layers 21, 22, and 23 can be provided on a surface on the aircraft inner side of the outer panel, a surface on the aircraft outer side of the inner panel, or the like.

All of the conductive layers 21, 22, and 23 are configured to be oriented in a lateral direction DH that is a horizontal direction included in the in-plane direction of the windshield 10.

Each of the conductive layers 21, 22, and 23 is designed as a circuit that allows a current to flow along the lateral direction DH.

The conductive layers 21, 22, and 23 are preferably formed linearly from one end to the other end along the lateral direction DH. The conductive layers 21, 22, and 23 extend over a substantially entire lateral width (a dimension in the horizontal direction) of each of the windshields 10A, 10A, 10B, and 10B.

The conductive layers 21, 22, and 23 are arranged at a predetermined interval in a longitudinal direction DV of the windshield 10. The longitudinal direction DV is perpendicular to the lateral direction DH in the in-plane direction of the windshield 10.

The conductive layers 21, 22, and 23 are electrically insulated from the retainer 12 disposed along the outer peripheral portion of the windshield panel 11, and the airframe.

The conductive layers 21, 22, and 23 of the present embodiment are not limited to a rectangular shape shown in FIG. 2, and may be set to a configuration oriented in the lateral direction DH in consideration of the shape of the windshield 10. The configuration oriented in the lateral direction DH corresponds to the circuit that allows a current to flow along the lateral direction DH that is a direction connecting positions from which a current is drawn (opposite end portions to which an electric wire is connected in the present embodiment) in each of the conductive layers.

A width of the conductive layer 21 may be changed in a length direction of the conductive layer 21. The same applies to the conductive layers 22 and 23.

Also, lengths of the conductive layers 21, 22, and 23 may be different from each other.

The conductive layers 21, 22, and 23 are connected to the controller 24 by electric wires 25A, 25B, and 25C as shown in FIG. 2. The electric wire 25A is connected to an A point between the conductive layers 21 and 22. The electric wire 25B is connected to a B point between the conductive layers 22 and 23. The electric wire 25C is connected to a C point between the conductive layers 21 and 23.

The controller 24 applies a drive current to the conductive layer 21 by electric power received from a power supply line that is mounted on the aircraft 1.

The controller 24 can control heat generation amounts of the conductive layers 21, 22, and 23 by changing a frequency or a voltage of the applied drive current.

The electric wires 25A, 25B, and 25C are wired in a region less affected by a magnetic field in association with lightning, such as the inside of the retainer 12 and the inside of the airframe.

The electric wires 25A, 25B, and 25C, and the controller 24 can be made redundant if necessary.

The windshield 10 and the anti-icing/anti-fogging device 20 need to have reliability against lightning.

A current of lightning striking a metal member such as the retainer 12 (FIG. 2) provided in the windshield 10 and a wiper (not shown) is spread to the airframe to which the metal member such as the retainer 12 is grounded. Therefore, it is possible to avoid damage to the windshield 10 by a shock or heat generated by the high current of lightning.

It is also necessary to avoid flowing of an excessive induced current through the conductive layers 21, 22, and 23 by a strong magnetic field generated around the lightning current.

In the present embodiment, an induced current induced in the conductive layers 21, 22, and 23 is suppressed by setting the direction in which the conductive layers 21, 22, and 23 are oriented to the lateral direction DH without blocking the strong magnetic field in association with the lightning current by an electromagnetic shield. Description will be made in the following.

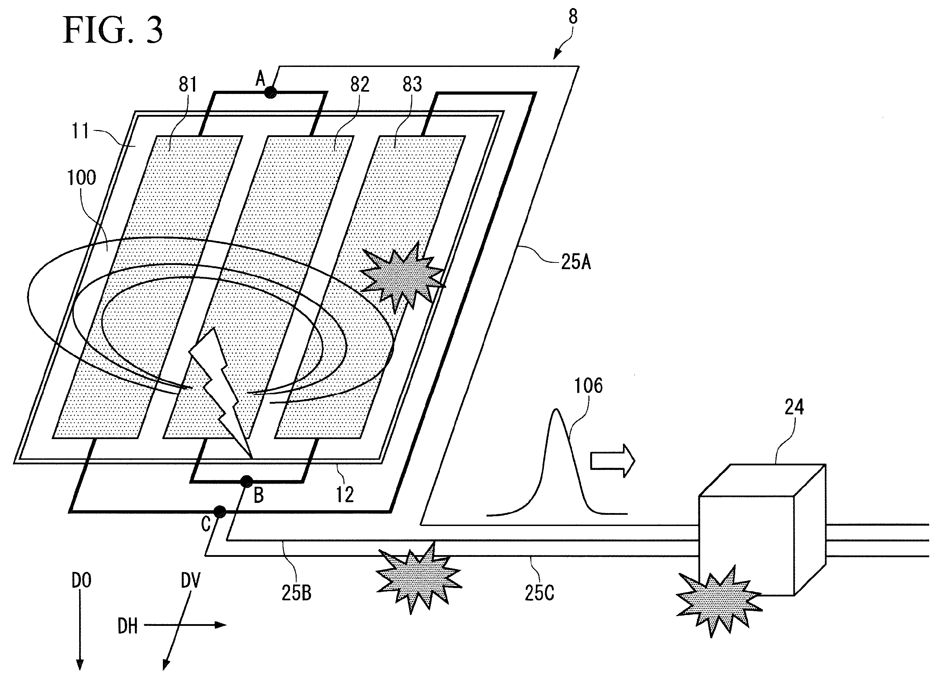

First, a typical configuration (FIG. 3) of the conductive layer that is the heater of the windshield will be described.

A windshield 8 shown in FIG. 3 includes three conductive layers 81, 82, and 83 corresponding to a three-phase alternating current. All of the conductive layers 81, 82, and 83 are oriented in the longitudinal direction DV perpendicular to the lateral direction DH in an in-plane direction of the windshield 8.

Each of the conductive layers 81, 82, and 83 is designed as a circuit that allows a current to flow along the longitudinal direction DV.

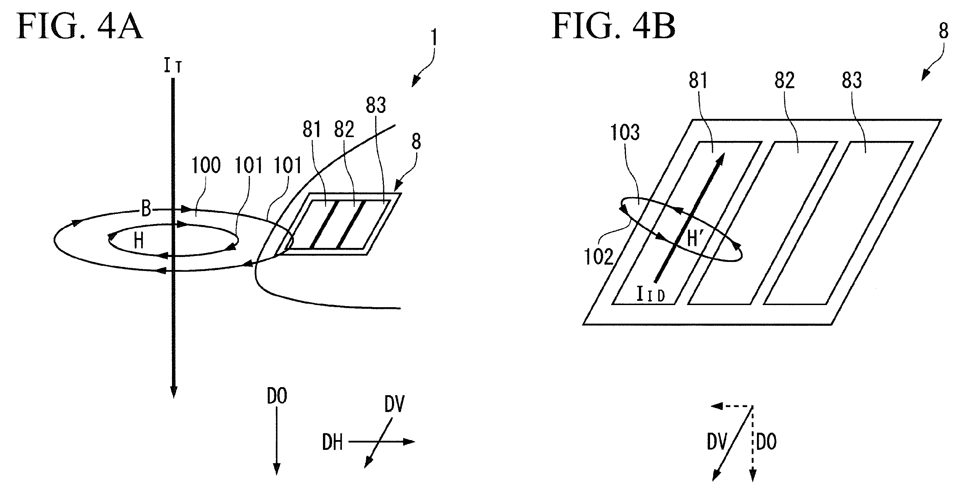

An induced current flowing through the conductive layers 81, 82, and 83 of the windshield 8 by a magnetic field in association with a lightning current will be described by reference to FIGS. 4A and 4B.

The aircraft 1 is likely to be struck by lightning generated between the aircraft 1 and a thundercloud existing above the aircraft 1. Thus, lightning is modeled by a lightning current I_{T} flowing from an upper side to a lower side in a vertical direction D0 (FIG. 4A).

A magnetic field H having a magnetic flux density B is generated around the lightning current I_{T} according to Ampere's law (right-hand corkscrew rule). A magnetic flux 101 of the magnetic field H is formed concentrically around the lightning current I_{T}. A wavefront 100 formed by the magnetic flux 101 is perpendicular to the lightning current I_{T}.

When the magnetic field H is generated by a lightning strike to the retainer 12 (FIG. 3) or the like of the windshield 10, an induced electromotive force proportional to a change in the magnetic flux 101 is generated in a conductor (the conductive layers 81, 82, and 83) through which the magnetic flux 101 of the magnetic field H passes, and an induced current I_{ID} flows (Faraday's law of induction). The induced current I_{ID} flows in a direction in which the change in the magnetic flux 101 is hindered (Lenz's law).

Therefore, when the magnetic flux 101 is increased by the lightning strike, the induced current I_{ID} flows through the conductive layers 81, 82, and 83 in a direction indicated by an arrow in FIG. 4B from the lower side to the upper side so as to generate a magnetic flux 102 in a direction in which the magnetic flux 101 is canceled. At this time, the magnetic flux 102 of a magnetic field H' generated around the induced current I_{ID} is formed around the induced current I_{ID} on a wavefront 103 perpendicular to the induced current I_{ID}.

When the magnetic field H is decreased by spreading the lightning current I_{T} to the airframe, the induced current I_{ID} flows through the conductive layers 81, 82, and 83 from the upper side to the lower side so as to generate the magnetic flux 102 in the same direction as the magnetic flux 101.

By the way, ease with which the induced current I_{ID} flows depends on a direction in which the conductor placed in the magnetic field H is oriented.

All of the conductive layers 81, 82, and 83 shown in FIG. 4B are oriented in the longitudinal direction DV. The longitudinal direction DV includes a component in the vertical direction D0.

When the component in the vertical direction D0 is included in the direction in which the conductive layers 81, 82, and 83 are oriented, the direction of the magnetic flux 102 on the wavefront 103 perpendicular to the induced current I_{ID} includes the direction in which the change in the magnetic flux 101 is hindered.

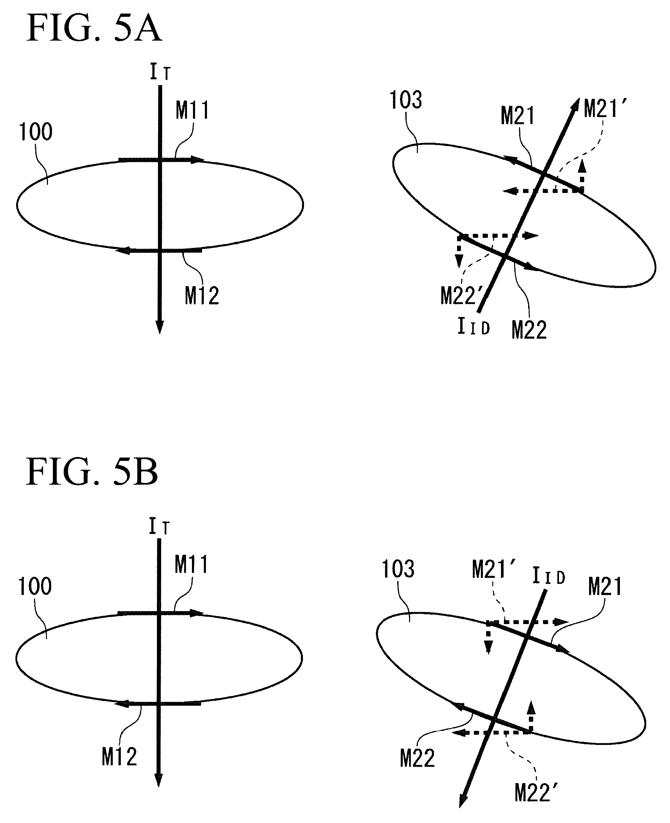

A case in which the increase in the magnetic flux 101 is hindered will be described by using magnetic fluxes M11 and M12 on the wavefront 100 and magnetic fluxes M21 and M22 on the wavefront 103 as an example by reference to FIG. 5A.

The magnetic fluxes M11 and M12 approximate the magnetic flux 101 (FIG. 4A) formed around an axis of the lightning current I_{T} in a straight line, and are both perpendicular to the vertical direction D0.

The magnetic fluxes M21 and M22 approximate the magnetic flux 102 (FIG. 4B) formed around an axis of the induced current I_{ID} in a straight line, and are both perpendicular to the longitudinal direction DV.

The magnetic flux M21 positioned on the wavefront 103 includes a component M21' in a direction opposite to a direction of the magnetic flux M11 positioned on the wavefront 100. The component M21' contributes to canceling the magnetic flux 101.

Also, the magnetic flux M22 positioned on the wavefront 103 includes a component M22' in a direction opposite to a direction of the magnetic flux M12 positioned on the wavefront 100. The component M22' contributes to canceling the magnetic flux M12.

As indicated by a relationship between the magnetic fluxes M21 and M22 and the magnetic fluxes M11 and M12 described above, the magnetic flux 102 contributes to hindering the increase in the magnetic flux 101.

The same applies to a case in which the decrease in the magnetic flux 101 is hindered.

As shown in FIG. 5B, the magnetic flux M21 positioned on the wavefront 103 includes the component M21' in the same direction as the direction of the magnetic flux M11 positioned on the wavefront 100.

Also, the magnetic flux M22 positioned on the wavefront 103 includes the component M22' in the same direction as the direction of the magnetic flux M12 positioned on the wavefront 100.

As indicated by a relationship between the magnetic fluxes M21 and M22 and the magnetic fluxes M11 and M12 described above, the magnetic flux 102 contributes to hindering the decrease in the magnetic flux 101.

Based on the above description, when the component in the vertical direction D0 is included in the direction in which the conductive layers 81, 82, and 83 are oriented (the longitudinal direction DV), the induced current I_{ID} flows through the conductive layers 81, 82, and 83 according to Lenz's law.

That is, based on the existence of the conductive layers 81, 82, and 83 that allow a current to flow in the direction in which the magnetic flux 102 that hinders the change in the magnetic flux 101 is generated, the induced current I_{ID} flows through the conductive layers 81, 82, and 83 placed in the magnetic field H.

Next, the conductive layers 21, 22, and 23 of the present embodiment will be described.

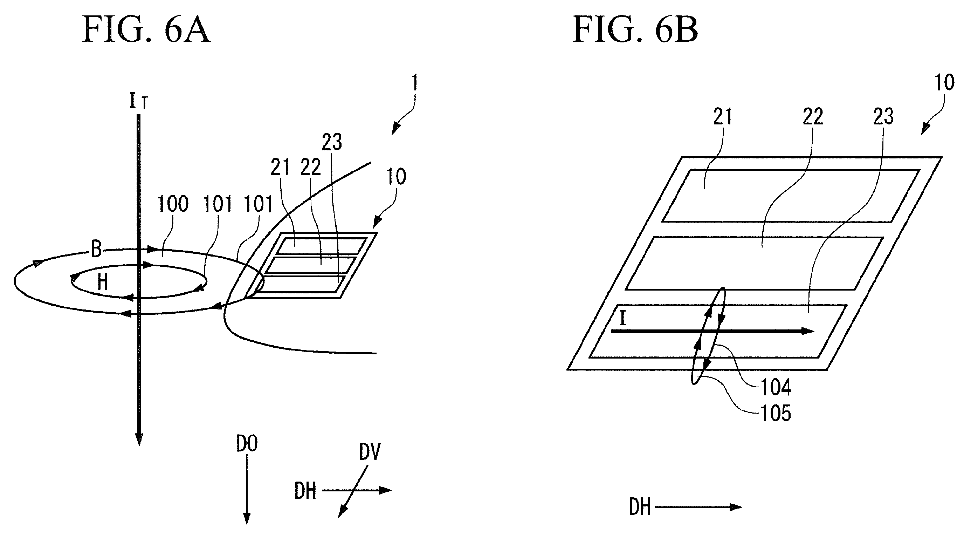

As shown in FIGS. 6A and 6B, all of the conductive layers 21, 22, and 23 are oriented in the lateral direction DH that is the horizontal direction.

When it is assumed that a current I flows through each of the conductive layers 21, 22, and 23, a magnetic flux 104 of a magnetic field generated around the current I flowing along the lateral direction DH in which the conductive layers 21, 22, and 23 are oriented is formed on a wavefront 105 perpendicular to the current I. The wavefront 105 and the horizontal wavefront 100 perpendicular to the lightning current I_{T} are perpendicular to each other.

Accordingly, the magnetic flux 104 in all directions on the wavefront 105 hardly builds a relationship of canceling or increasing the magnetic flux 101 with the magnetic flux 101 in all directions on the wavefront 100.

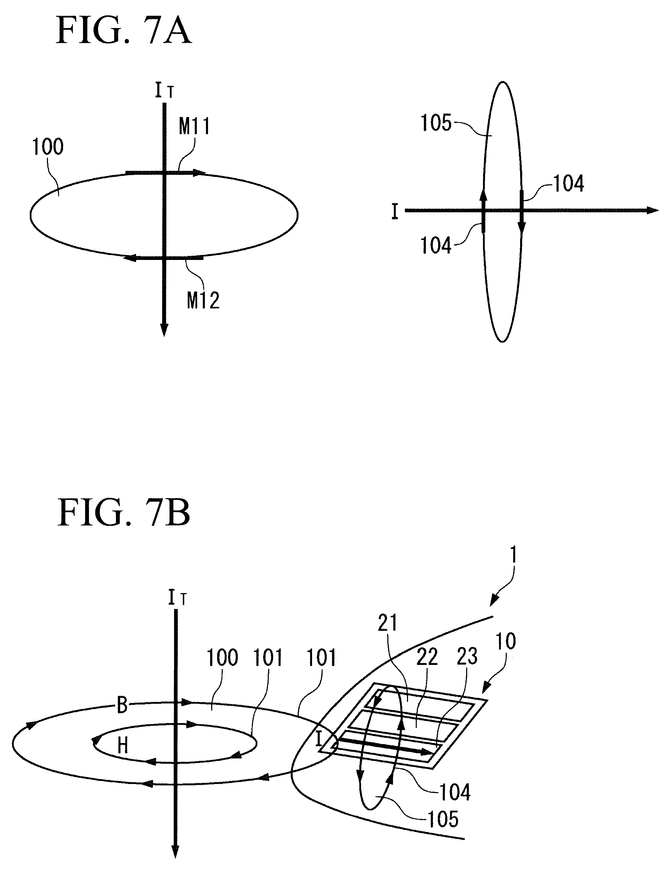

As shown in FIG. 7A, for the wavefront 105 as a whole, the magnetic flux 104 that does not contribute to canceling or increasing the magnetic flux 101 at all is dominant, and the change in the magnetic flux 101 is hardly hindered by the magnetic flux 104.

Based on the above description, even when the conductive layers 21, 22, and 23 are placed in the strong magnetic field H in association with the lightning current I_{T}, the induced current (the above current I) hardly flows through the conductive layers 21, 22, and 23.

The wavefront 100 and the wavefront 105 may not be in a strict perpendicular relationship as shown in FIG. 7B depending on an attitude of the aircraft 1 and a direction of the lightning current I_{T}.

However, based on an attitude of the aircraft 1 that the aircraft 1 can assume in a normal condition, and a lightning strike situation of the aircraft 1, other components of the magnetic flux 104 than a component of the magnetic flux 104 that cancels or increases the magnetic flux 101 are dominant as compared to the canceling or increasing component. Thus, the induced current flowing through the conductive layers 21, 22, and 23 is suppressed.

In accordance with the present embodiment described above, it is possible to avoid problems that a high induced current exceeding an allowable limit of the conductive layers 21, 22, and 23 flows through the conductive layers 21, 22, and 23, the electric wires 25A, 25B, and 25C connected to the conductive layers 21, 22, and 23 are burnt out by the induced current, and a voltage of the controller 24 is increased beyond a withstand voltage by the induced current flowing into the controller 24 through the electric wires 25A, 25B, and 25C. Even when the induced current flows into the controller 24 through the electric wires 25A, 25B, and 25C as unexpected noise 106 as shown in FIG. 2, the noise 106 is sufficiently smaller than the noise 106 in the typical example (FIG. 3).

In accordance with the present embodiment, it is possible to prevent deterioration of the conductive layers 21, 22, and 23 with the conductive layers 21, 22, and 23 overheated by the induced current flowing in a lightning strike, and damage to the controller 24 with the controller 24 exceeding the withstand voltage by the induced current. It is thus possible to ensure sufficient reliability of the windshield 10 and the anti-icing/anti-fogging device 20 against lightning strikes.

### [Second Embodiment]

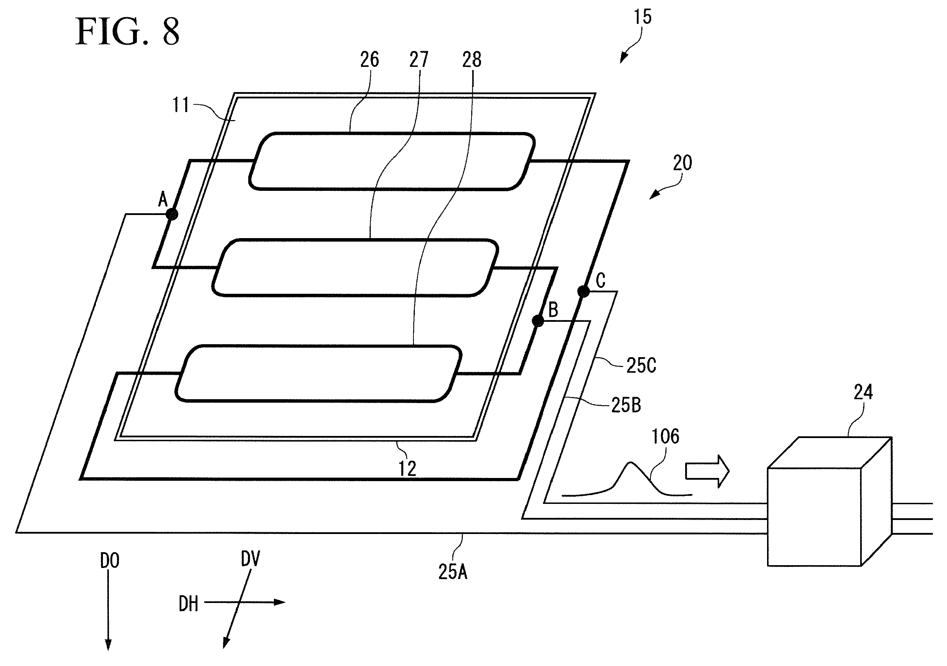

Next, a second embodiment of the present invention will be described by reference to FIG. 8.

In the following, different points from those of the first embodiment will be mainly described.

In the second embodiment, electrically-heated wires 26, 27, and 28 that are wired in an in-plane direction of a windshield 15 are used as a heater of the windshield 15.

The electrically-heated wires 26, 27, and 28 are provided in the windshield 15 by embedding the electrically-heated wires 26, 27, and 28 in the windshield panel 11 or sandwiching the electrically-heated wires 26, 27, and 28 between the windshield panels 11.

The electrically-heated wires 26, 27, and 28 correspond to a three-phase alternating current applied by the controller 24, and generate heat when a current is supplied.

All of the electrically-heated wires 26, 27, and 28 are wired in a loop shape oriented in the lateral direction DH that is included in the in-plane direction of the windshield 15. The electrically-heated wires 26, 27, and 28 are formed linearly from one end to the other end along the lateral direction DH.

The electrically-heated wires 26, 27, and 28 are arranged at a predetermined interval in the longitudinal direction DV of the windshield 15.

Each of the electrically-heated wires 26, 27, and 28 is designed as a circuit that allows a current to flow along the lateral direction DH in which the electrically-heated wires 26, 27, and 28 are oriented.

As long as the electrically-heated wires 26, 27, and 28 are oriented in the lateral direction DH, the electrically-heated wires 26, 27, and 28 can be wired in an appropriate form such as a rectangular shape and a ladder shape.

Since the electrically-heated wires 26, 27, and 28 are oriented in the lateral direction DH similarly to the above conductive layers 21, 22, and 23, the induced current I_{ID} is hardly induced similarly to the description in the first embodiment (see FIGS. 6A, 6B, and 7A) even when the electrically-heated wires 26, 27, and 28 are placed in the magnetic field H in association with the lightning current I_{T}.

Therefore, it is possible to prevent burnout of the electrically-heated wires 26, 27, and 28 and the electric wires 25A, 25B, and 25C and damage to the controller 24.

The constitutions described in the aforementioned embodiments may be also freely selected or appropriately changed into other constitutions without departing from the gist of the present invention.

The windshield of the present invention can be configured to include two conductive members to which a single-phase alternating current is applied. In this case, the two conductive members may be formed so as to be oriented in the horizontal direction (the lateral direction DH) included in the in-plane direction of the windshield.

## Claims

1. A windshield of an aircraft, comprising
a conductive member that is configured to generate heat when a current is supplied,
wherein the conductive member is oriented in a lateral direction that is a horizontal direction included in an in-plane direction of the windshield.

2. The windshield of an aircraft according to claim 1,
wherein the conductive member is a belt-like member along the in-plane direction.

3. The windshield of an aircraft according to claim 1,
wherein the conductive member is a line-like member that is wired in the in-plane direction.

4. The windshield of an aircraft according to claim 2,
wherein the belt-like member is a conductive layer which is formed of a transparent thin film or a substantially transparent thin film.

5. The windshield of an aircraft according to claim 3,
wherein the line-like member is an electrically-heated wire.

6. The windshield of an aircraft according to any one of claims 1 to 5,
wherein the conductive member includes three conductive members, and a three-phase alternating current is supplied to the three conductive members.

7. The windshield of an aircraft according to claim 4,
wherein the conductive member is configured to be connected to a controller directly or indirectly, the controller controlling a heat generation amount of the conductive member.

8. The windshield of an aircraft according to claim 4,
wherein a main body of the windshield is a laminate including a plurality of transparent windshield panels, and
the conductive layer is located between the windshield panels.

9. The windshield of an aircraft according to claim 5,
wherein a main body of the windshield is a laminate including a plurality of transparent windshield panels, and
the electrically-heated wire is embedded in at least one of the windshield panels, or is sandwiched between the windshield panels.

10. The windshield of an aircraft according to claim 1,
wherein the windshield is not provided with an electromagnetic shield that covers the conductive member.

11. The windshield of an aircraft according to claim 8,
wherein the windshield panels and the conductive layer are not covered with an electromagnetic shield.

12. The windshield of an aircraft according to claim 9,
wherein the windshield panels and the electrically-heated wire are not covered with an electromagnetic shield.

13. The windshield of an aircraft according to claim 1,
wherein a main body of the windshield is a laminate including a plurality of transparent windshield panels,
the windshield further comprises a retainer that is formed of a metal material and is disposed along an outer peripheral portion of the laminate, and
the conductive member is electrically insulated from the retainer and an airframe of the aircraft.

14. An aircraft comprising the windshield according to any one of claims 1 to 13.
